(19) Europäisches Patentamt
European Patent Office
Office européen des brevets

(11) **EP 2 575 274 B1**

(12) **EUROPEAN PATENT SPECIFICATION**

(45) Date of publication and mention
of the grant of the patent:
**09.10.2013 Bulletin 2013/41**

(51) Int Cl.:
***H04J 11/00*** *(2006.01)*     ***H04B 7/08*** *(2006.01)*

(21) Application number: **11182918.0**

(22) Date of filing: **27.09.2011**

(54) **Method and receiver for recovering a desired signal transmitted in the presence of one or more interference signals**

Verfahren und Empfänger zur Rückgewinnung eines gewünschten Signals in der Gegenwart von einem oder mehreren Störsignalen

Procédé et récepteur pour récupérer un signal désiré transmis en présence d'un ou plusieurs signaux d'interférence

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.04.2013 Bulletin 2013/14**

(73) Proprietor: **NTT DoCoMo, Inc.**
**Chiyoda-ku**
**Tokyo 100-6150 (JP)**

(72) Inventors:
• **Auer, Gunther**
**80339 München (DE)**
• **Fang, Kun**
**80339 München (DE)**

(74) Representative: **Zimmermann, Tankred Klaus et al**
**Schoppe, Zimmermann, Stöckeler**
**Zinkler & Partner**
**P.O. Box 246**
**82043 Pullach (DE)**

(56) References cited:
• **KUN FANG ET AL: "Iterative OFDM receiver with combined interference suppression and cancellation", PERSONAL INDOOR AND MOBILE RADIO COMMUNICATIONS (PIMRC), 2011 IEEE 22ND INTERNATIONAL SYMPOSIUM ON, IEEE, 11 September 2011 (2011-09-11), pages 1412-1416, XP032102134, DOI: 10.1109/PIMRC. 2011.6139734 ISBN: 978-1-4577-1346-0**

**Description**

Embodiments of the present invention relate to communication systems such as mobile communication systems. More specifically, embodiments of the invention relate to approaches for recovering a desired signal transmitted in such systems in the presence of one or more interference signals. Embodiments of the invention describe a method for recovering a desired signal and a receiver, e.g. an iterative receiver with interference rejection and cancellation.

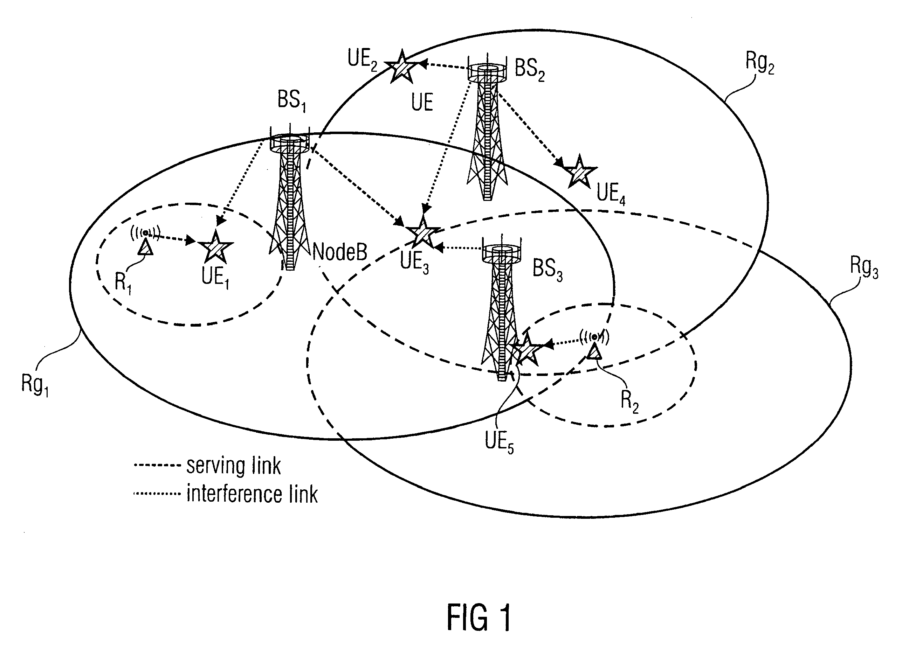

Fig. 1 shows a schematical representation of a portion of a cellular system comprising a plurality of base stations or nodes $BS_1$, $BS_2$ and $BS_3$. Each base station $BS_1$, $BS_2$ and $BS_3$ has a predefined range $Rg_1$, $Rg_2$ and $Rg_3$, respectively. The ranges $Rg_1$, $Rg_2$ and $Rg_3$ overlap in a way as shown in Fig. 1. Further, Fig. 1 shows a plurality of mobile devices or user equipments UE (UE = user equipment) as well as additional resources $R_1$ and $R_2$ with which a user device may communicate. For example, the user equipment $UE_1$ is communicating with the resource $R_1$, as is shown by the solid arrow. However, the user equipment $UE_1$ is in the range of the base station $BS_1$ and, therefore, also receives an interference signal as is shown by the dashed arrow. By means of the solid arrows so-called "servicing links" are indicated, whereas the dashed arrows indicate so-called "interference links". For example, user equipment $UE_2$ and user equipment $UE_4$ are only in range of base station $BS_2$ and are connected to the base station $BS_2$ only via a serving link, i.e., the user equipment $UE_2$ and $UE_4$ do not experience any interference. Contrary thereto, user equipment $UE_3$ that is connected to the first base station $BS_1$ via the servicing link receives interference signals from the base stations $BS_2$ and $BS_3$. User equipment $UE_5$ is connected to the base station $BS_3$ via a servicing link, however, receives an interference signal from the resource $R_2$.

Communication systems, such as cellular systems will have a frequency reuse factor of one to enable a high system capacity. Thus, on the downlink the user equipment UE at a cell edge might experience a large inter-cell interference from neighboring base stations, while on the uplink, the base station might experience large interference from other user equipments transmitting using the same physical layer time/frequency resources. In the example shown in Fig. 1, for example, user equipment $UE_3$ may be at a cell edge of a cell around base station $BS_1$ and, therefore, may experience the above-mentioned inter-cell interference from the neighboring base stations $BS_2$ and $BS_3$. The reduced signal to interference plus noise ratio (SINR) will severely degrade the overall system performance.

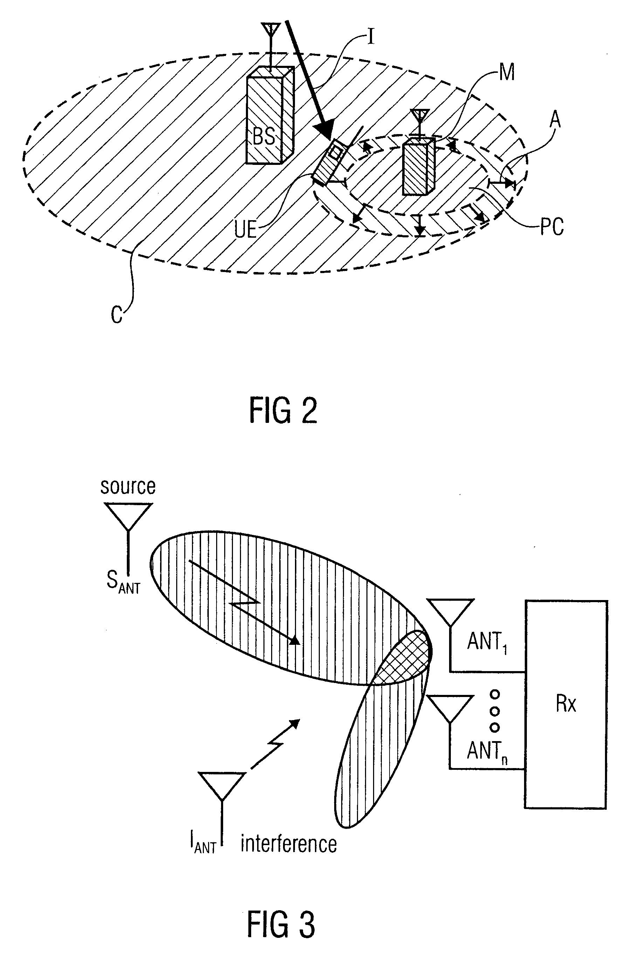

Similar problems may exist in networks, like heterogeneous networks (HetNets) that may allow for a range expansion. Fig. 2 shows an example of such a heterogeneous network. In such a network, a Piconet is formed, for example by a picocell base station M that is connected to a base station BS serving a cell C. By means of the area served by the picocell base station M, a Picocell PC is defined within which a user equipment communicates with the picocell base station M which, in turn, communicates with a base station BS. Such networks may allow for an expansion of the range as indicated by the arrows A increasing the Picocell PC within which the user equipment may be served by the picocell base station M. However, this may result in a situation as shown in Fig. 2 in which the user equipment UE is at a location where it receives a large interference signal I from the base station BS that may even be larger than the desired signal power seen at the receiver in the user equipment.

In the art, there are different approaches to improve the system performance, for example, power control and radio resource management. Also, receiver side signal processing techniques are known to effectively combat the performance degradation due to the presence of strong interference signals. One approach is the so-called receiver optimum combining described by J. Winters, "Optimum combining in digital mobile radio with cochannel interference", IEEE J. Sel. Areas Commun., vol. 2, no. 4, pp. 528-539, Jul. 1984. This approach is also named "Interference Rejection Combining" (IRC) and is proposed to null out the interference using an adaptive antenna array. A. N. Barreto and R. D. Vieira, "A critical analysis of receiver diversity with multiple antennas with spatially coloured noise", Proc. of Intl. Workshop on Signal Processing Advances in Wireless Communication (SPAWC 2008), Recife, Brazil, Jul. 2008 show that a large performance gain can be achieved by applying IRC over the maximum ratio combining (MRC) approach with spatially colored noise plus interference. Fig. 3 is a schematic representation of a receiver having an antenna array receiving a desired signal and an interference signal. As is shown in Fig. 3, the receiver Rx comprises a plurality of antennas $ANT_1$ to $ANT_n$. It is assumed that a source antenna $S_{ANT}$ transmits a desired signal towards the receiver Rx. Further, an interference signal is provided from another antenna $I_{ANT}$. At the receiver Rx, receiver beamforming is done using the antenna array ANT, to $ANT_n$, thereby focusing on the signal received from the source antenna $S_{ANT}$ and preferably nulling out the interference signal from the interference antenna $I_{ANT}$. One approach, as mentioned above, is the interference rejection combining approach (IRC) that has shown large gain and that has also been specified for the HSDPA (high speed downlink packet access). By means of the IRC approach, the linear receiver beamforming approach, the receiver RX suppresses the interference signals and allows estimation and decoding of the desired signal transmitted from the antenna $S_{ANT}$.

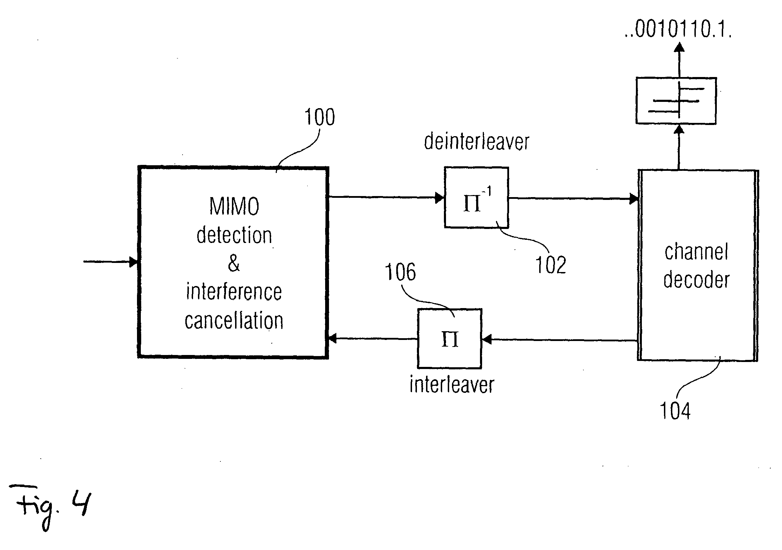

On the other hand, iterative receiver techniques are known to improve the system performance which is inspired by the so-called turbo equalization described by M. Tüchler, R. Koetter, and A. C. Singer, "Turbo equalization: principles and new results", IEEE Trans. Commun., vol. 50, no. 5, pp. 754-767, May 2002. In accordance with this approach, the soft information between different receiver function blocks is iteratively exchanged. Fig. 4 shows a block diagram of such an iterative receiver. The receiver comprises the input block 100 which executes a MIMO (multiple input/multiple output) detection and also an interference cancellation. The processed signal is forwarded through a deinterleaver 102 to a channel decoder 104 that decodes the signal and outputs the decoded symbol. The signal generated by the channel decoder 104 is fed back via an interleaver 106 to the input block 100. The receiver shown in Fig. 4, for a number of iterations, estimates interference signals by taking into account information from a previous iteration, cancels the interference signals, and estimates and decodes the desired signal, again taking into account the information from the previous iteration. This iterative receiver avoids the high complexity for an optimum joint processing.

Another approach is to apply a nonlinear detector using a successive interference cancellation (SIC), in case the additional complexity can be afforded. This is described by X. Wang and H. Poor, "Iterative (turbo) soft interference cancellation and decoding for coded CDMA," IEEE Trans. Commun., vol. 47, no. 7, pp. 1046-1061, Jul. 1999, and by G. J. Foschini, G. D. Golden, R. A. Valenzuela and P. W. Wolniansky, "Simplified processing for high spectral efficiency wireless communication employing multi-element arrays", IEEE J. Sel. Areas Commun., vol. 17, no. 11, pp. 1841-1852, Nov. 1999. In accordance with the successive interference cancellation process dependent from an antenna array size at the receiver one or more of the strongest interference signals or interferers are cancelled.

Thus, in the prior art a number of approaches for avoiding a degradation of the signal to interference plus noise ratio are known which use either a resource partitioning and cell selection, which, however, sacrifices time/ frequency/ space resources. Also inter base station cooperation is known, however, this requires an accurate channel knowledge from neighboring cells. Also interference suppression and cancellation at the receiver as well as iterative receivers using soft information exchange are known.

KUN FANG ET AT: "Iterative OFDM receiver with combined interference suppression and cancellation", Personal Indoor and Mobile Radio Communications (PIMRC), 2011 IEEE 22nd International Symposium on, IEEE, 11. September 2011, pages 1412 - 1416 describes, for cellular networks having an increased cell density and decreased cell size resulting in significant inter-cell interference, combining an adaptive antenna array and an iterative receiver to facilitate inter-cell interference suppression and cancellation at the receiver end. Iterative receivers exchange soft information between different receiver modules, e.g., symbol detector and channel decoder. An adaptive antenna array is integrated within the iterative receiver, which performs interference suppression and successive interference cancellation. The beamforming weight vectors are updated in each iteration using interference rejection combing, which takes into account the soft information from the channel decoder and previously estimated interfering signals. The described algorithm can effectively suppress and cancel the interference signal with various signal-to-interference ratios under different channel models.

It is an object of the invention to provide an improved interference management scheme.

This object is achieved by a method according to claim 1 and by a receiver according to claim 17.

In accordance with embodiments calculating the one or more beamforming weights comprises considering only one dominant interferer and treating the other interference signals as additional temporally and spatially white Gaussian noise.

In accordance with embodiments the desired signal is transmitted using an OFDM transmission, and the same one or more beamforming weights are calculated for a sub-block of an OFDM resource block. The OFDM resource block may comprise a plurality of subcarriers and a plurality of OFDM symbols, and the sub-block comprises a frequency length defined by a number of subcarriers in the frequency domain and a time length defined by a number of OFDM symbols in the time domain. In case a beamforming weight vector is calculated for each subcarrier the time length of the sub-block may be equal to the number of OFDM symbols in the resource block and the frequency length of the sub-block is set to one, and a single covariance matrix may approximate all covariance matrices in the sub-block for the respective subcarrier.

In accordance with embodiments calculating the beamforming weights may comprise calculating the same beamforming weight vector for the data symbols in the same sub-block. The beamforming weight vector may be calculated on the basis of a single covariance matrix approximating all covariance matrices for the noise plus interference signals in the sub-block. The single covariance matrix is calculated as follows:

$$R_{\hat{p}} = \frac{1}{M_t M_f} \sum_{k=0}^{M_f} \sum_{l=0}^{M_t} \bar{y}_{k,l} \bar{y}_{k,l}^H,$$

$M_t$ = the number of continuous subcarriers in the frequency domain, and
$M_f$ = the number of OFDM symbols in the time domain,
$\bar{y}_{k,l}$ = the processed receive signal.

In accordance with embodiments the sub-block the statistical property of the noise plus interference signal are approximated to be constant.

In accordance with embodiments an OFDM subframe comprises a predefined number of resource blocks, wherein in the channel coefficients of a transmission channel are approximated to be constant in the time domain during one subframe, wherein the time length of the sub-block is equal to the number of OFDM symbols in the subframe, and wherein the frequency length of the sub-block is set depending on the subcarriers experiencing similar channel fading in the frequency domain. In case in the frequency domain the statistical property of the noise plus interference signal in the channel can be approximated to be constant, the frequency length of the sub-block may be equal to the number of subcarriers in the subframe. In case the channel is a highly frequency selective fading channel, the frequency length of the sub-block may be set to one.

In accordance with embodiments processing the received signal may comprise:

(a) at an initial stage processing the signal received by beamforming using initial beamforming weights,

(b) obtaining an initial estimate of the strongest signal on the basis of the signal processed by beamforming, the initial estimate including soft information,

(c) subtracting from the signal received the soft information to generate a processed signal,

(d) on the basis of the processed signal calculating the beamforming weights,

(e) obtaining an estimate of the next strongest signal on the basis of the processed signal processed by beamforming, the estimate including soft information, and

(f) repeating the steps (c) to (e) on the basis of the processed signal, until an estimate of the desired signal portion is obtained or until a maximum number of iterations is reached.

In accordance with embodiments the initial beamforming weights are calculated on the basis of pilot symbols included in the signal received, wherein beamforming may comprise linear receiver beamforming, e.g. interference rejection combining, and wherein processing the received signal may comprise interference cancellation, for example successive interference cancellation. The number of iterations may depend from the number of interference signals the receiver can cancel. The number of iterations may be an arbitrary number which is independent from the number of receive antennas.

Thus, embodiments of the invention provide for an improved and efficient approach for interference suppression or cancellation using a low- complexity approach avoiding the matrix inversion required to calculate the beamforming approach.

Embodiments of the invention use, in a new way, known approaches for interference cancellation. More specifically, embodiments of the invention provide an iterative receiver using the SIC (successive interference cancellation) algorithm that operates by successively canceling a stronger signal from a received signal including various signal portions. This is repeated until all users are decided or a permissible number of cancellations is reached. The strongest signal is determined in each iteration using the interference rejection combining (IRC) algorithm, which is a beamforming approach. The one or more weights for this beamforming approach are calculated in each iteration without matrix inversion on the basis of the signal processed in the previous iteration, preferably for maximizing the SINR. The beamforming weights may be calculated to maximize the SINR between the target detected signal in a current iteration (the target detected signal may be the desired signal or the interference signal) and other signals left in the processed received signals. The beam-forming calculation may be done using well known approaches (see e.g. by R. A. Monzingo and T. W. Miller, Introduction to adaptive arrays, New York, Wily, 1980). Embodiments of the invention provide an approach that is able to achieve the desired cell and cell-edge spectral efficiency targets.

Embodiments of the invention provide an iterative receiver algorithm to enhance the performance of interference limited systems. By suppressing the interference using adaptive  antenna arrays, the estimation performance can be greatly improved. For the advanced receiver which is capable of decoding the desired signal as well as part of the interference signal, the successive interference cancellation may be used to further increase the receiver robustness to interference. While the optimal joint processing is prohibitive due to the heavy computational requirements, performing these operations separately in an iterative fashion allows for exploiting the advantages of these two approaches while reducing the receiver complexity.

In accordance with embodiments of the invention, for example for users at a cell edge in a cellular system, the serious degradation of the system performance due to inter-cell interference may be avoided or reduced by using the interference rejection combining (IRC) algorithm that nulls out the interference using adaptive antenna arrays. In addition, a receiver that is capable of decoding the desired signal as well as part of the interference signal may employ the successive interference cancellation (SIC) which first demodulates the interference signal by nulling out the desired signal, and then subtracts the estimated interference symbols from the received signal so that the desired signal can be decoded with much less interference. As mentioned above, performing these two approaches jointly would be prohibitive due to the heavy computational requirements, so that in accordance with the inventive approach the above described IRC algorithm and the SIC algorithm as well as other functions are performed separately in an iterative fashion thereby reducing the receiver complexity, with soft information being interchanged between different receiver components, for example the channel estimator, the MIMO detector and the channel decoder.

Thus, embodiments of the invention provide an advanced receiver for estimating a signal in the presence of a strong inter- cell interference. Adaptive antenna arrays are used to develop a receiver beamforming approach within an iterative receiver, where the one or more beamforming weights are updated in each iteration taking into account the soft information from the channel decoder and previously estimated interference signals. The signals (either the interference or desired signals) having a large power can be first estimated using an optimum combining approach as described above and then can be successively cancelled to further improve the performance.

The proposed algorithm or approach may be applied at the base station or at a user equipment.

The inventive approach is advantageous as through the advanced signal processing at the receiver the interference can be rejected and cancelled or at least substantially reduced, thereby achieving a better performance which, in turn, leads to a higher spectral efficiency, a higher frequency use factor, a large number of users to be served, and a user experience enhancement. This allows increasing the network capacity and serving a larger number of customers/ users concurrently.

In accordance with embodiments of the present invention, an advanced receiver for signal detection in the presence of strong inter-cell interference, in the context of 3GPP long term evolution (LTE) downlink transmission, is presented which is based on an orthogonal frequency-division multiplexing (OFDM) approach. An adaptive antenna array facilitates receiver beamforming within an iterative receiver, including successive interference cancellation (SIC). The beamforming weight vectors are updated in each iteration using IRC, which takes into account the soft information from the channel decoder and previously estimated interfering signals. The signals (either the interference signal or the desired signal) having larger power can be first estimated using optimum combining and can then be successively canceled to further improve performance. In accordance with the inventive approach, embodiments provide for a low-complexity algorithm to avoid the matrix inversion required to calculate the beamforming weight.

The inventive approach is advantageous as it allows significant performance gains to be obtained which leads to a higher robustness with regard to large power interference, to the possibility of reducing the number of iterations which, in turn, reduces the complexity, to a higher spectral efficiency and increased network capacity, an improved user experience and the possibility of concurrently serving a larger number of users.

Embodiments of the invention will be described in the following with reference to the drawings in which:

Fig. 1      shows a schematical representation of a portion of a cellular system;

Fig. 2      shows an example of a heterogeneous network;

Fig. 3      is a schematic representation of a receiver having an antenna array receiving a desired signal and an interference signal;

Fig. 4      shows a block diagram of an iterative receiver;

Fig. 5      is a block diagram of a transmitter as it may be used in a communication system in which the iterative receiver approach using combined interference suppression and cancellation in accordance with embodiments of the invention is applied;

Fig. 6      shows a block diagram of a receiver in accordance with embodiments of the invention;

Fig. 7      depicts a frame structure of an OFDM transmission system

Fig. 8      shows a further embodiment of the invention using an iterative receiver approach implanting a successive interference canceller;

Fig. 9      shows, on the basis of the resource block of Fig. 7, different beamforming approaches, wherein Fig. 9(a) shows a block beamforming approach, and Fig. 9(b) depicts the per-carrier beamforming approach; and

Fig. 10    shows a graph of the frame error rate (FER) in case one interferer is present with a SIR equal to -5 dB, under the assumption of the EVecA channel model.

In the subsequent description of embodiments of the invention, reference will be made to the user equipment side operation for a downlink transmission. However, it is noted that the principles described in the following can be equally applied to the base station side operation and it is straightforward to extend the subsequently described approach or algorithm accordingly. Further, it is noted that in the subsequent description the following notation will be used. The upper (lower) boldface letters are used to denote matrices (column vectors) . $(.)^T$ and $(.)^H$ represent a transpose and complex conjugate transpose (Hermitian), respectively. E $(.)$ stands for the statistical expectation. The covariance matrix between x and **y** is defined as Cov $(\mathbf{x}, \mathbf{y})$ = E $(\mathbf{xy}^H)$- E $(\mathbf{x})$ E $(\mathbf{y}^H)$ . $\mathbf{I}_N$ denotes the $N \times N$ identity matrix.

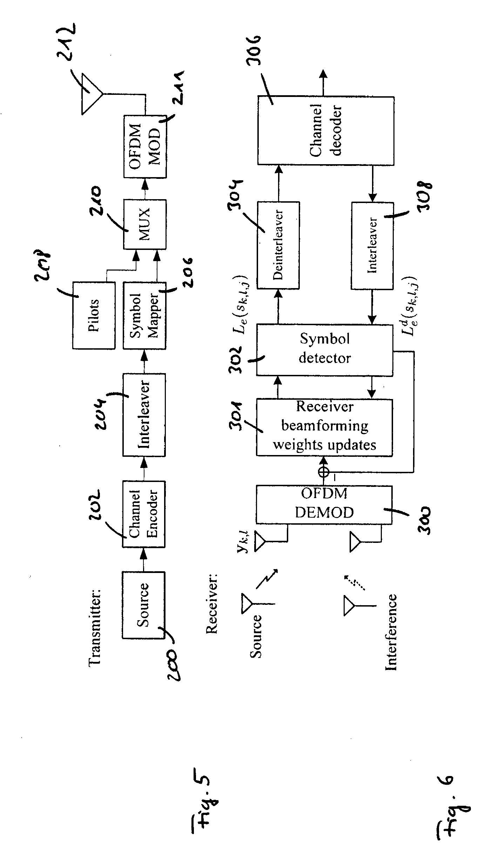

Fig. 5 is a block diagram of a transmitter as it may be used in a communication system in which the iterative receiver approach using combined interference suppression and cancellation in accordance with embodiments of the invention is applied. The transmitter comprises a source 200 providing the signal to be transmitted, a channel encoder 202 and an interleaver 204. Further, a symbol mapper 206 is provided as well as a pilot symbol source 208 wherein the signals from the symbol mapper 206 and the pilot signals from the pilot symbol source 208 are combined by the multiplexer 210 and forwarded via the OFDM modulator 211 to the antenna 212 for transmission.

Fig. 6 shows a block diagram of a receiver in accordance with embodiments of the invention. The receiver comprises a plurality of antennas connected to an OFDM demodulating block 300 which, in turn, is connected a block 301 for processing the demodulated signals. It is noted that embodiments may use two or more antennas. The principles described here equally apply to such receivers as well. Block 301 performs the receiver beamforming and the necessary receiver beamforming weight updates. The signals output from block 301 are input into a symbol detector 302 that detects a symbol and outputs it to a deinterleaver 304 that, in turn, provides the signal to a channel decoder 306 that outputs a decoded symbol. Further, the symbol decoded by the decoder 306 is fed back to the symbol detector 302 via an interleaver 308, and, further, the symbol is also fed back to the block 301. In Fig. 6 two antennas providing signals towards the receiver are shown, namely the source antenna providing the desired signal and an interference antenna providing an interference signal. Thus, at the receiver's antenna array a signal is received comprising portions from the source antenna and from the interference antenna, i.e., a desired signal portion and an interference signal portion.

In the subsequent discussion, it is assumed that a single user equipment having a receiver as shown in Fig. 6 receives a desired signal from a serving base station, the source, as well as interference signals from neighboring base stations transmitting using the same carrier frequency. The base stations from different cells are assumed to be synchronized, so that the desired signal and the interference signals start at the same time and have the same duration. The user equipment has $N_R$ receive antennas which are used for performing inter-cell interference suppression and cancellation. For a user equipment at a cell edge experiencing large interference and having low received SINR, transmit beamforming can be applied by the base station to direct more energy to the cell edge users. Each base station is assumed to have one antenna to transmit one stream of information. However, it is noted that the invention is not limited to such embodiments but it is straightforward to extend the subsequently described approaches and algorithms to a multi-antenna case, where both the user equipment and the base station are equipped with a plurality of antennas to enable diversity reception and multiple stream transmission (spatial multiplexing) as, for example, described by L. Zheng and D.N.C. Tse, "Diversity and multiplexing: A fundamental trade-off in multiple antenna channels", IEEE Trans. On Inform. Theory, vol. 49, no. 5, pp. 1073-1096, May. 2003.

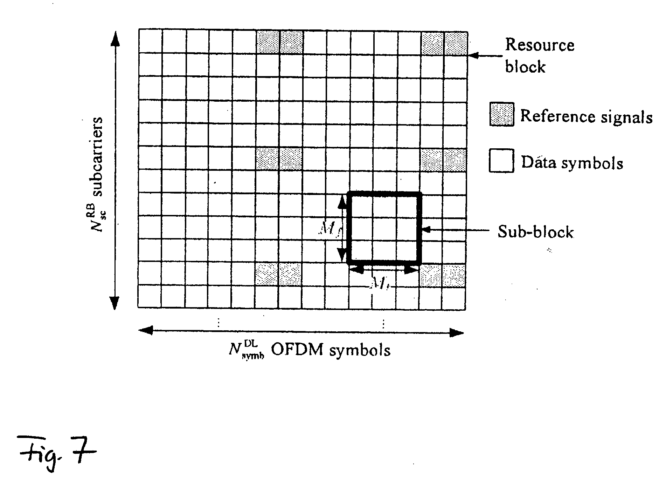

In accordance with embodiments, the communication system comprises an LTE downlink transmission system which is based on OFDM, as it is for example described in 3GPP TS36.211, "Evolved Universal Terrestrial Radio Access (E-UTRA); Physical Channels  and Modulations". The frame structure of such a transmission system is depicted in Fig. 7. Fig. 7 shows a resource block comprising $N_{sc}^{RB} = 12$ subcarriers and $N_{symb}^{DL} = 14$ OFDM symbols. One subframe comprises $N_{RB}$ resource blocks, and for the subsequent description a minimum scheduling unit of one resource block is assumed.

In the time domain, the channel is assumed to be constant during one subframe, and independent and identically distributed (i.i.d.) on different subframes. In the frequency domain, channel fading is characterized by different channel models. The structure of a possible transmitter and a receiver are shown in Figs. 5 and 6. At the transmitter, a sequence of bits is encoded with error correction coding, and the coded bits are interleaved and mapped into complex data symbols. The reference signals or pilot signals are multiplexed with data symbols to form the time-frequency grid for transmission. For simplicity, a unit-energy quaternary phase-shift keying (QPSK) is assumed having a symbol alphabet $\alpha_i$, i = 1, ..., 4, which are used for the desired signal as well as for all other interference signals. Nevertheless, it is noted that the inventive approach described herein can be easily extended to other constellations, for example as is described by M. Tüchler, A.C. Singer, and R. Koetter, "Minimum mean squared error equalization using a priori information," IEEE Trans. Signal Processing, vol. 50, pp. 673-683, Mar. 2002.

For a discrete-time baseband model, after cyclic prefix (CP) removal and FFT at the receiver, the received signal on subcarrier $k$ of the $l$th OFDM symbol can be written as:

$$\begin{pmatrix} y^1_{k,l} \\ \vdots \\ y^{N_R}_{k,l} \end{pmatrix} = \sum_{j=0}^{X'} \begin{pmatrix} h^1_k(j) \\ \vdots \\ h^{N_R}_k(j) \end{pmatrix} s_{k,l}(j) + \begin{pmatrix} n^1_{k,l} \\ \vdots \\ n^{N_R}_{k,l} \end{pmatrix} \qquad (1)$$

where $y^m_{k,l}$ is the received signal at the $m$th receive antenna, $s_{k,l}(0)$ is the transmitted signal from the serving base station, $h^m_k(0)$ is the channel coefficient between the transmitter antenna of the serving base station and the mth receive antenna on the $k$th subcarrier, $s_{k,l}(j)$ is the transmitted signal from the $j$th interfering base station, $h^m_k(j)$ is the channel coefficient between the transmit antenna of the $j$th interfering base station and the $m$th receive antenna on the $k$th subcarrier. $n^m_{k,l}$ stands for the additive temporally and spatially white Gaussian noise at the $m$th receive antenna, which is uncorrelated with the data symbols from the serving and interfering base stations, and with a zero mean and variance $\sigma^2_n$.

In the subsequent discussion, it is assumed that the receiver has the necessary channel state information (CSI) between the serving base station and the user equipment, and in case of embodiments applying the successive interference cancellation (SIC) it is further assumed that the user equipment has knowledge about the interference link. To reduce the decoding complexity, only the desired signal will be decoded, and the interference signal is detected at the symbol level without further decoding. In this way, only limited information, for example the channel between the user equipment and the interfering base station and the modulation scheme of the interference signals, is needed at the user equipment.

In accordance with an embodiment, initially, on the basis of pilot symbols in the signal received at the antennas, beamforming weights are calculated and the antennas are controlled on the basis of the information from the block 301 in such a way that a major reception beam is directed towards the interference antenna while a minor reception beam is directed away from the interference and source antennas thereby suppressing the desired signal provided by the source antenna and other possible interference signals. The signal received from the interference antenna is estimated and the estimated interference signal is subtracted from the received signal. In the next iteration, the beamforming weights are recalculated such that the major reception beam is now directed towards the source antenna while the minor reception beam is directed in a direction different from a direction of the interference antenna. This results is a suppression of the interference signal and allows estimating from the signal received now the desired signal which is then finally decoded at block 306 and output. In other words, in accordance with embodiments of the invention for a number of iterations an interference cancellation is carried out in accordance with which on the basis of a linear receiver beamforming approach a desired signal is suppressed (taking into account information from a previous iteration), the interference signals are estimated, again taking into account information from the previous iteration, and finally the interference signals are cancelled. For each operation a new linear receiver beamforming is executed by calculating new weights, thereby suppressing the interference signals so that the desired signal may be estimated and decoded. Thus, the iterative receiver processes the received signal by the linear receiver beamforming approach and passes the processed signal to the symbol detector from which the detected symbol is subsequently fed back to the linear receiver beamforming unit in an iterative manner, wherein in each iteration the beamforming weights are calculated/recalculated based on the previously decided interference and desired signals fed back from the symbol detector in a preceding iteration.

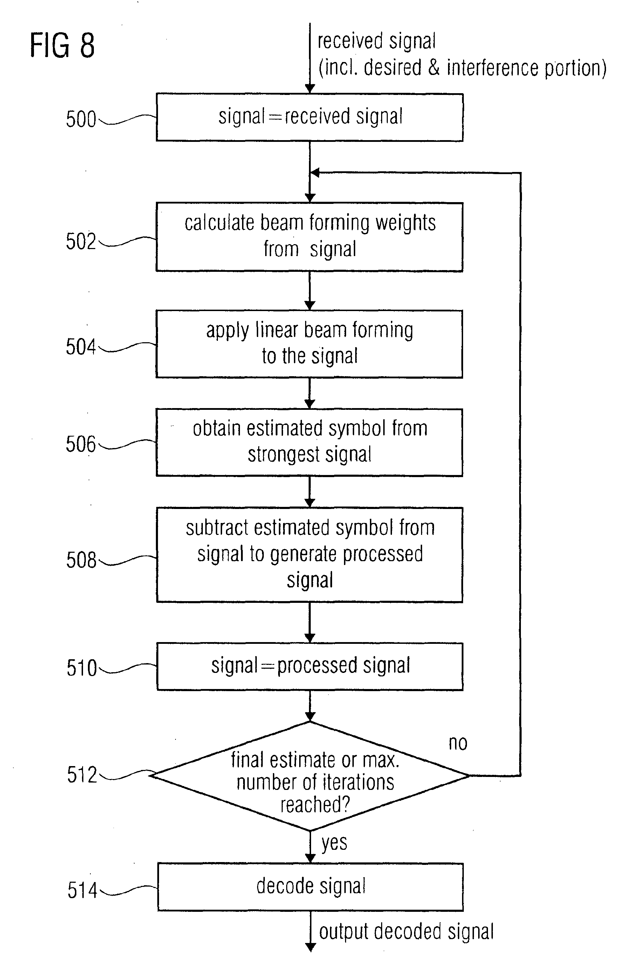

Fig. 8 shows a further embodiment of the invention using an iterative receiver approach implanting a successive interference canceller. At 500 a signal is received which includes a desired signal and one or more interference signals. The received signal is the signal subsequently processed. At 502, the beamforming weights are calculated from the signal. In an initial state, the received signal is processed by the linear receiver beamforming block 300 (see Fig. 6) using an initial set of beamforming weights. After the beamforming weights were calculated in 502 the linear beamforming approach is applied to the signal at 504 using the calculated beamforming weight. An output generated at block 300 is passed to symbol detector 302 for obtaining at 506 an estimated symbol from the strongest signal, which may be either the interference signal or the desired signal. At an initial stage at 506 an initial estimate of the strongest signal is obtained. At 508 the soft information about the strongest signal is fed back and subtracted from the signal to construct a processed received signal so that at 510 the signal is now the processed signal. At 512 it is determined whether a final estimate of the desired signal is now available or whether a maximum number of iterations is reached. In case neither the final estimate is available nor the maximum number of iterations is reached, the method goes back to block 502 and starts a further or subsequent iteration in which the beamforming weights are recalculated based on the processed received signal which is then fed to the block 300 for linear receiver beamforming using the updated set of beamforming weights. The output of block 300 is again passed to the symbol detector 302 to obtain an estimate of the second strongest signal (in the second iteration). In case it is determined in step 512 that the final estimate is reached or the maximum number of iterations is reached, the method proceeds to step 514, where the signal is decoded and output.

In accordance with embodiments of the invention, the linear receiver beamforming weights are computed such that the signal to interference plus noise ratio between the desired signal and the interference is maximized. By means of the inventive approach described above, significant performance gains can be achieved. This yields a system that is more robust with regard to a large power interference as it may be experienced in HetNets (see Fig. 2). Also, the number of iterations can be reduced which, in turn, reduces the complexity of the system. A higher spectral efficiency and an increase in network capacity can be achieved. Further, the user experience is improved and the number of users served concurrently may be increased.

Subsequently, the embodiment of Fig. 8 will be described in further detail on the basis of an iterative receiver implemented with a SIC approach where the desired signal as well as a certain number of interference signals are detected. Equation (1) is rewritten by stacking the signals from the $N_R$ receiver antennas (see Fig. 6) together, and reordering the index according to their signal power at the receiver

$$y_{k,l} = \sum_{j=0}^{X'} \mathbf{h}(j) s_{k,l}(j) + \mathbf{n}_{k,l} \qquad (2)$$

where $y_{k,l} = [y_{k,l}^1, \ldots, y_{k,l}^{N_R}]^T$, $h(j) = [h_k^1(j), \ldots, h_k^{N_R}(j)]^T$, $n_{k,l} = [n_{k,l}^1, \ldots, n_{k,l}^{N_R}]^T$, X' is the number of interference signals the receiver can detect and cancel, and the received signal h (0) $s_{k,l}(0)$ is assumed to have the largest received signal-to-noise ratio (SNR) .

At an initial state, no prior information is available. The received signal is processed by linear receiver beamforming using an initial set of beamforming weights, which is calculated from the received pilot symbols. The output is passed to the symbol detector 302 to obtain an initial estimate of the strongest signal which may either be the interference signal or the desired signal, and then the estimated signal is subtracted from the received signal to construct a processed received signal. The beamforming weight vectors are recalculated based on the processed received signal. In a subsequent iteration, the processed signal is fed to the linear receiver beamforming block 301 using an updated set of beamforming weight vectors, and the output is passed to the symbol detector 302 to obtain the estimate of the second strongest signal. The iterations are repeated until the final estimate of the desired signal is available or until a maximum number of iterations is reached. In accordance with embodiments, only the soft information for the desired signal is sent to the channel decoder 306 to be decoded, and the interference signals will only be estimated at the symbol level without further decoding. This allows the user equipment to save computational complexity and only limited information needs to be exchanged between the interfering base station and the user equipment. The detailed algorithms are described below.

At the $q$th iteration, the updated unbiased estimate of $s_{k,l}(x)$ may be expressed as discussed by J. Winters, "Optimum combining in digital mobile radio with cochannel interference," IEEE J. Sel. Areas Communication, vol. 2, no. 4, pp. 528-539, July 1984:

$$\hat{s}_{k,l}(x) = \mathbf{w}_{k,l}^H \overline{\mathbf{y}}_{k,l} = \frac{\mathbf{h}^H(x) \mathbf{R}_{k,l}^{-1} \overline{\mathbf{y}}_{k,l}}{\mathbf{h}^H(x) \mathbf{R}_{k,l}^{-1} \mathbf{h}(x)}, \qquad (3)$$

where $\mathbf{w}_{k,l}$ is the beamforming weight vector for estimating the symbol $s_{k,l}(x)$ at the qth iteration. $\overline{\mathbf{y}}_{k,l}$ is the processed receive signal for estimating the symbol $s_{k,l}(x)$ at the qth iteration, which is obtained by subtracting the previously detected signal, and which can be written as follows

$$\overline{\mathbf{y}}_{k,l} = \mathbf{y}_{k,l} - \sum_{j=0}^{X} \mathbf{h}(j)m_{k,l}(j), j \neq x , \qquad (4)$$

where X is the number of signals that have been detected at that stage, and $m_{k,l}(j)$ is the mean of the symbol $s_{k,l}(j)$ at that stage, which is calculated from soft information as will be explained in further detail later.

The vector $\mathbf{u}_{k,l}$ is defined as the sum of noise, residual interference after SIC and other interference signals, which have not been detected at the qth duration when estimating the symbol $s_{k,l}(x)$. The vector $\mathbf{u}_{k,l}$ can be written as follows

$$\mathbf{u}_{k,l} = \sum_{j=0.j \neq x}^{X} \mathbf{h}(j)\left[s_{k,l}(j) - m_{k,l}(j)\right] + \sum_{j=X+1}^{X'} \mathbf{h}(j)s_{k,l}(j) + \mathbf{n}_{k,l} , \qquad (5)$$

$\mathbf{u}_{k,l}$ is assumed to be a temporarily white and spatially correlated vector with complex normal distribution $CN\ (\mathbf{0},\mathbf{R}_{k,l})$. In a packet-switched network, as traffic signals are scheduled per subframe, the interference signals from neighboring cells may vary from subframe to subframe. On the other hand, the channel statistics also vary over different subcarriers.

The beamforming weight vectors

$$\mathbf{w}_{k,l} = \mathbf{R}_{k,l}^{-1}\mathbf{h}(x) / \left[\mathbf{h}^{H}(x)\mathbf{R}_{k,l}^{-1}\mathbf{h}(x)\right] , \qquad (6)$$

are derived to maximize the output SINR, as is for example described by R.A. Monzingo and T.W. Miller, Introduction to adaptive arrays, New York, Wily, 1980, which can be expressed as follows

$$\mathrm{SINR}_{o} = \frac{\left|\mathbf{w}_{k,l}^{H}\mathbf{h}(x)s_{k,l}(x)\right|^{2}}{\left|\mathbf{w}_{k,l}^{H}\overline{\overline{\mathbf{y}}}_{k,l}\right|^{2}} , \qquad (7)$$

where $\overline{\mathbf{y}}_{k,l} = \overline{\mathbf{y}}_{k,l} - \mathbf{h}(x)\ m_{k,l}(x)$ .

In order to obtain the beamforming weights $\mathbf{w}_{k,l}$ in equation (3), the covariance matrix $\mathbf{R}_{k,l}$ for each vector $\mathbf{u}_{k,l}$ is to be estimated. At the first iteration, as no prior information about the data symbols are available, only the receive signals containing reference signals or pilot signals are used to estimate the covariance matrix $\mathbf{R}_{k,l}$. Due to the limited number of reference signals in one subframe, only one beamforming weight vector is derived based on the reference signals and used to detect all the data symbols in the subframe for the first iteration. In later iterations, received signals contain both previously detected data symbols as well as reference signals to improve the estimation quality of $\mathbf{R}_{k,l}$.

Since a matrix inverse is needed to estimate the signal $s_{k,l}(x)$ in equation (3), it is not practical to apply a specific beamforming weight vector for each data symbol. Thus, in accordance with embodiments of the invention, a sub-block, as is shown in Fig. 7, is defined, which has $M_f$ continuous subcarriers in the frequency domain and $M_t$ OFDM symbols in the time domain. In each sub-block, the channel statistics are approximated to be flat in both time and frequency domain. Thus, the statistical property of the noise plus interference signal $\mathbf{u}_{k,l}$ can be approximated to be constant in one sub-block. In this way, the same beamforming weight vector can be used to detect all the data symbols in the same sub-block. For the pth sub-block the corresponding beamforming weight vector $\mathbf{w}_p$ is used to detect all data symbols in the pth sub-block. A single covariance matrix which is used to approximate all covariance matrices $\mathbf{R}_{k,l}$ in the pth sub-block due to the sub-block dividing criterion can be written as

$$\mathbf{R}_p = \frac{1}{M_t M_f} \sum_{k=0}^{M_t} \sum_{l=0}^{M_f} \overline{\mathbf{y}}_{k,l} \overline{\mathbf{y}}_{k,l}^H,$$ (8)

as is also described in E.G. Larsson, "Robust structured interference rejection combining," in Proc. of IEEE Wireless Communications and Networking Conference (WCNC), New Orleans, LA, March 2005.

Assuming a time-invariant channel means that the channel coefficients are constant in the time domain during one subframe. Thus, the time length for each sub-block can be chosen equal to the number of OFDM symbols in one subframe. However, the frequency length of the sub-block may depend on the frequency selectivity of the channel, so that only the sub-carriers experiencing similar channel fading in the frequency domain will be grouped into the same sub-block. Two extreme cases may be considered, and the practical channel conditions will render the frequency length $M_f$ therebetween.

*(1) Block beamforming approach:*

If the channel is also flat in the frequency domain, the same beamforming weight vector may be applied to detect all data symbols in one subframe, which means that the frequency length is equal to the number of subcarriers in one subframe, i.e. $M_f = N_{\text{sc}}^{\text{RB}}$.

*(2) Per-carrier beamforming approach:*

If the receiver experiences a high frequency selective fading channel, each subcarrier may have its own beam-forming weight vector, so that the frequency length is set to 1, i.e., $M_f = 1$.

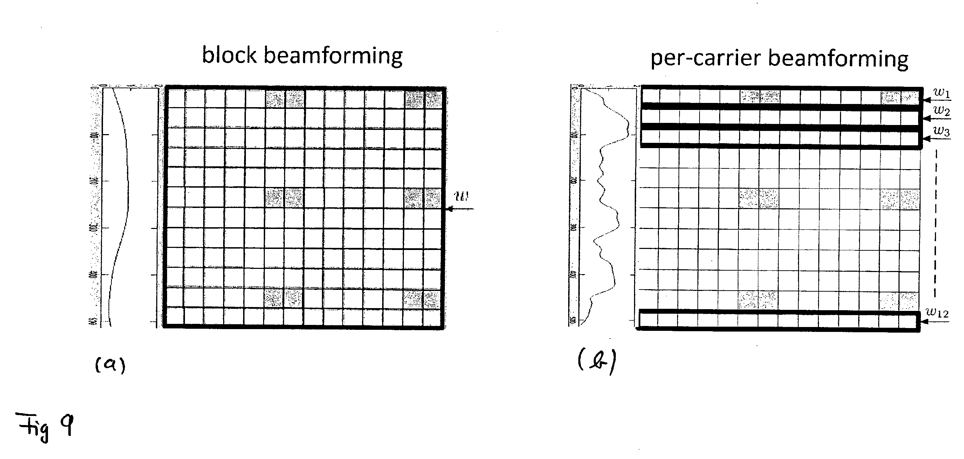

Fig. 9 shows, on the basis of the resource block of Fig. 7, the just mentioned approaches. Fig. 9(a) shows the block beamforming approach on the basis of the resource block of Fig. 7. As can be seen, a beamforming weight vector **w** is determined for the entire resource block of subframe, i.e. the beamforming weight vector is calculated for all symbols and all subcarriers, whereas the left-hand side of Fig. 9(a) indicates the flat channel property in the frequency domain. For the block beamforming approach calculating the beamforming weight vector requires one matrix inversion.

Fig. 9(b) depicts the per-carrier beamforming approach. As can be seen, for the resource block or subframe of Fig. 7, twelve (12) beamforming weight vectors $\mathbf{w}_1$ to $\mathbf{w}_{12}$ need to be calculated, since the channel property, as is seen on the left-hand side of Fig. 9(b), is not flat, i.e. changes fast in the frequency domain. In view of this situation, the per-carrier beamforming approach is selected and for each subcarrier a beamforming weight vector covering all OFDM symbols is calculated which requires a high number of matrix inversions for calculating the respective beamforming weight vectors.

In accordance with the inventive approach, the complexity associated with the necessity to perform one or more matrix inversions for calculating the beamforming weight vector is reduced by avoiding such matrix inversions, as will be described in further detail below.

For the desired signal, the soft information of the estimated symbol from the detector 302 will be sent to the channel decoder 306. For simplicity, in the subsequent description the corresponding user index $x$ is dropped and the desired signal is denoted as $s_{k,l}$, with ($s_{k,l,1}$, $s_{k,l,2}$) as the related bits. The mean of the symbol $s_{k,l}$ is denoted as $m_{k,l} = E(s_{k,l})$. As far as the data symbols are concerned, the means are initialized with zeros. But in every iteration, they are updated using soft information from the estimated symbols. On the other hand, for reference or pilot symbols, the mean is set to actual value for all the iterations.

After each iteration of the detector 302 and the decoder 306 the mean is updated using the soft estimated symbols. Mores specifically, the extrinsic log-likelihood ratio (LLR) is calculated as $L_e(s_{k,l,j}) = L(s_{k,l,j}|\hat{s}_{k,l}) - L(s_{k,l,j})$ where $L(s_{k,l,j})$ is the "a priori" LLR and $L(s_{k,l,j}|\hat{s}_{k,l})$ is the "a posteriori" LLR, which are defined as

$$L(s_{k,l,j}) = \ln \frac{P(s_{k,l,j} = 0)}{P(s_{k,l,j} = 1)},$$

$$L(s_{k,l,j} \mid \hat{s}_{k,l}) = \ln \frac{P(s_{k,l,j} = 0 \mid \hat{s}_{k,l})}{P(s_{k,l,j} = 1 \mid \hat{s}_{k,l})} \; ,$$

where $j = 1, 2$, where $\hat{s}_{k,l}$ is the estimated symbol at the current iteration, where $P(s_{k,l,j} = 0)$ and $P(s_{k,l,j} = 1)$ are the a priori probabilities, and where $P(s_{k,l,j} = 0 \mid \hat{s}_{k,l})$ and $P(s_{k,l,j} = 1 \mid \hat{s}_{k,l})$ are the posteriori probabilities.

In order to calculate $L(s_{k,l,j})$ the probability density function (PDF) $p(\hat{s}_{k,l} \mid s_{k,l} = \alpha_i)$ is derived, which can be approximated as Gaussian:

$$p(\hat{s}_{k,l} \mid s_{k,l} = \alpha_i) = \frac{1}{\pi \sigma_{k,l,i}^2} \cdot e^{-|\hat{s}_{k,l} - \mu_{k,l,i}|^2 / \sigma_{k,l,i}^2} \; , \tag{9}$$

with mean $\mu_{k,l,j} = E(\hat{s}_{k,l} \mid s_{kl} = \alpha_i)$ and variance $\sigma_{k,l,i}^2 = \mathrm{Cov}(\hat{s}_{k,l}, \hat{s}_{k,l} \mid s_{k,l} = \alpha_i)$, as is described, for example, by M. Tüchler, R. Koetter, and A. C. Singer, "Turbo equalization: principles and new results", IEEE Trans. Commun., vol. 50, no. 5, pp. 754- 767, May 2002 and M. Tüchler, and by A. C. Singer and R. Koetter, "Minimum mean squared error equalization using a priori information", IEEE Trans. Signal Processing, vol. 50, pp. 673- 683, Mar, 2002. The mean $\mu_{k,l,i}$ and the variance $\sigma^2_{k,l,i}$ can be as follows

$$\begin{aligned} \mu_{k,l,i} &= \alpha_i \\ \sigma_{k,l,i}^2 &= 1 / (\mathbf{h}^H \mathbf{R}_p^{-1} \mathbf{h}). \end{aligned} \tag{10}$$

where $\mathbf{R}_p$ is the covariance matrix of $\mathbf{u}_{k,l}$ at the $q$th iteration for $\mathbf{u}_{k,l}$ belonging to the $p$th sub- block in equation (8). The extrinsic LLR can be subsequently calculated as

$$\begin{aligned} L_e(s_{k,l,1}) &= \sqrt{8} \mathrm{Re}(\hat{s}_{k,l})(\mathbf{h}^H \mathbf{R}_p^{-1} \mathbf{h}) \\ L_e(s_{k,l,2}) &= \sqrt{8} \mathrm{Im}(\hat{s}_{k,l})(\mathbf{h}^H \mathbf{R}_p^{-1} \mathbf{h}). \end{aligned} \tag{11}$$

(see K. Fang, L. Rugini and G. Leus, "Low- complexity block turbo equalization for OFDM systems in time- varying channels", IEEE Trans. Signal Processing, vol. 56, no. 11, pp. 5555- 5566, Nov. 2008).

As is shown in Fig. 6 the extrinsic LLR $L_e(s_{k,l,j})$ is passed to the decoder 306 to generate a new extrinsic LLR $L_e^d(s_{k,l,i})$, which is added to the a priori LLR to form the a posteriori LLR or the new version of the a priori LLR which is used to update the mean of the estimated symbol:

$$\begin{aligned} L_{new}(s_{k,l,j}) &= L(s_{k,l,j}) + L_e^d(s_{k,l,j}) \\ m_{k,l,new} &= \frac{\tanh(\frac{L_{new}(s_{k,l,1})}{2}) + i \cdot \tanh(\frac{L_{new}(s_{k,l,2})}{2})}{\sqrt{2}}. \end{aligned} \tag{12}$$

(see M. Tüchler, R. Koetter, and A. C. Singer, "Turbo equalization: principles and new results", IEEE Trans. Commun., vol. 50, no. 5, pp. 754-767, May 2002 and K. Fang, L. Rugini and G. Leus, "Low-complexity block turbo equalization for OFDM systems in time-varying channels", IEEE Trans. Signal Processing, vol. 56, no. 11, pp. 5555-5566, Nov. 2008.

The above calculation is for the desired signal, whose soft information is passed to the channel decoder 306 for decoding the information bits. For interference signals, only the extrinsic information $L_e(s_{k,l,j}^x)$ is used to update the mean value shown in equation (12) which is calculated in the same way as shown in equations (10) and (11).

As has been described above, the per-carrier beamforming approach is preferred for receivers experiencing a highly frequency-selective channel. However, as mentioned, each beamforming weight calculation requires one matrix inverse operation as is clear from equation (6), which gives rise to a high computational complexity due to the large number of subcarriers. In accordance with the inventive approach, a low complexity algorithm is provided to calculate the beamforming weight without matrix inversion, which will reduce the complexity drastically, especially for receivers equipped with a large number of receive antennas.

The system input-output relationship of equation (4) can be rewritten as follows:

$$\overline{\mathbf{y}}_{k,l} = \mathbf{h}(x)s_{k,l}(x) + \mathbf{h}(y)\left[s_{k,l}(y) - m_{k,l}(y)\right] + \eta_{k,l} \tag{13}$$

where only one dominant interferer $y$ after SIC is considered at that stage, the other interference signals are treated as additional temporally and spatially white Gaussian noise- The effective noise term $\eta_{k,l}$ is assumed to have a complex normal distribution $CN\left(\mathbf{0}, \sigma_\eta^2 \mathbf{I}_{N_R}\right)$. This allows to write the covariance matrix $\mathbf{R}_{k,l}$ as follows:

$$\mathbf{R}_{k,l} = \mathbf{h}(y)\left|s_{k,l}(y) - m_{k,l}(y)\right|^2 \mathbf{h}^H(y) + \sigma_\eta^2 \mathbf{I}_{N_R} = \mathbf{h}(y)v_{k,l}(y)\mathbf{h}^H(y) + \sigma_\eta^2 \mathbf{I}_{N_R} \tag{14}$$

where $v_{k,l}(y)$ is the variance of the estimated symbol $\hat{s}_{k,l}(y)$ at the qth iteration.

The one dominant interferer $y$ can be chosen according to the order of SIC, which depends on the received signal power, or according to a certain metric, for example by comparing the residue interference power at that stage. The variance of the effective noise $\eta_{k,l}$ can be calculated follows

$$\sigma_\eta^2 = \sigma_n^2 + \sum_{j=0}^{X} v_{k,l}(j)\left|\mathbf{h}(y)\right|^2, \, j \neq x, j \neq y \tag{15}$$

By applying the matrix inversion lemma, the inverse of the covariance matrix $R_{k,l}$ can be expressed as follows

$$\begin{aligned}
\mathbf{R}_{k,l}^{-1} &= \left[\mathbf{h}(y)v_{k,l}(y)\mathbf{h}^H(y) + \sigma_\eta^2 \mathbf{I}_{N_R}\right]^{-1} \\
&= \frac{1}{\sigma_\eta^2}\mathbf{I}_{N_R} - \frac{1}{\sigma_\eta^4}\mathbf{h}(y)\left[v_{k,l}^{-1}(y) + \mathbf{h}^H(y)\frac{1}{\sigma_\eta^2}\mathbf{I}_{N_R}\mathbf{h}(y)\right]^{-1}\mathbf{h}^H(y) \\
&= \frac{1}{\sigma_\eta^2}\left(\mathbf{I}_{N_R} - \frac{\mathbf{h}(y)\mathbf{h}^H(y)}{\sigma_\eta^2 / v_{k,l}(y) + \left|\mathbf{h}(y)\right|^2}\right)
\end{aligned} \tag{16}$$

Thus, in accordance with the inventive approach the matrix inversion is avoided, rather as can be seen from equation (16) only a vector multiplication is needed, which requires a lower computational complexity and also avoids potential errors when inverting a singular matrix. It is noted that the above approach is applicable to sub- blocks having $k$ subcarriers and $l$ OFDM symbols.

Considering the per-carrier beamforming approach described above, the time/frequency length of a sub-block is set to be $M_t = N_{\text{symb}}^{\text{DL}}$ and $M_f = 1$, respectively. The single covariance matrix used to approximate all $R_{k,l}$ in the sub-

block for subcarrier $k$ can be obtained by averaging the symbol variance $v_{k,l}$ in the time domain, which can be expressed as follows:

$$\mathbf{R}_k^{-1} = \frac{1}{\sigma_n^2} \left( \mathbf{I}_{N_R} - \frac{\mathbf{h}(y)\mathbf{h}^H(y)}{\sigma_n^2 / v_k(y) + |\mathbf{h}(y)|^2} \right) \qquad (17)$$

where $v_k(y) = \sum_{l=1}^{N_{symb}^{DL}} v_{k,l}(y) / N_{symb}^{DL}$ . The beamforming weight for the kth subcarrier can be subsequently calculated according to equation (6), however, the matrix inversion is avoided by applying the new noise plus interference signals' covariance matrix as outlined in (17).

The extrinsic LLR and soft information update can be similarly derived as in equations (11) and (12) with the symbol variance being calculated as

$$v_{k,l,new} = 1 - |m_{k,l,new}|^2 \qquad (18)$$

As outlined above, the per-carrier beamforming approach uses the low-complexity algorithm in accordance with embodiments of the invention, however, as mentioned, this algorithm takes into account a single dominant interference signal. This might give rise to performance degradation in the early iteration when the residual interference still has large power, as the interference signals are spatially colored but are approximated as additive spatially white Gaussian noise. However, there are, in general, only a few dominant interferers in cellular systems, and simulation results show that the interference signals can be largely removed after the first iteration.

On the other hand, the covariance matrix $\mathbf{R}_{k,l}$ might be a singular matrix, which causes a large error when performing a matrix inversion operation, so that the low-complexity per-carrier beamforming algorithm in accordance with the inventive approach is expected to provide substantially the same performance as an original (known) approach using inversion, as has been validated by the inventors in simulations.

As just mentioned, the new algorithms have been examined and compared to original approaches by simulations. For the simulations, the receiver has been assumed to have two receive antennas. The Extended Vehicular A (EvecA) channel models as described in 3GPP TS 36.101, "Evolved Universal Terrestrial Radio Access (E-UTRA); User Equipment (UE) radio transmission and reception" has been used for the simulation, which has a large number of channel taps and a long delay spread. The signal-to-interference ratio (SIR) for the xth interferer is defined as $\mathrm{SIR}_x = 1/\mathrm{E}(|h_t^x|^2)$, where $|h_t^x|^2$ is the energy of all the channel taps in the time domain. The SNR is defined as $\mathrm{SNR} = 1/\mathrm{E}(\sigma_n^2)$. For all the serving and interfering base stations, the channel coefficients between the base station transmit antenna and the receive antennas are i.i.d.. A rate 1/3 turbo code has been used at the transmitter, and the decoder at the receiver employs a constant log-MAP decoding algorithm. For each detector and decoder iteration, the turbo decoder performs two iterations within the decoder, and when the SIC is applied the interference signal is first detected and then canceled.

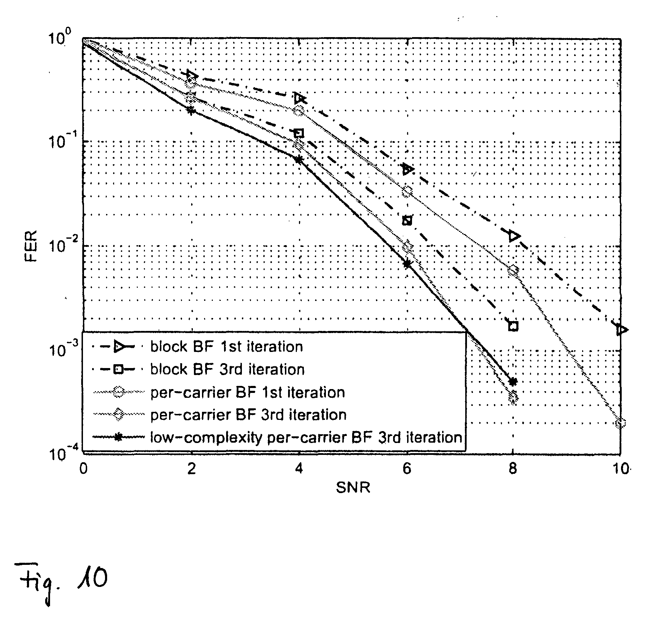

Fig. 10 shows the frame error rate (FER) in case one interferer is present with a SIR equal to -5 dB, under the assumption of the EVecA channel model. The FER performance after the first iteration and after the third iteration is plotted, and it can be seen that a significant performance improvement is achieved by applying the per-carrier approach when compared to the block approach. The inventive low-complexity per-carrier beamforming algorithm further shows a similar FER performance as the original one, however with a reduced complexity.

While the above embodiments have been described in the context using an OFDM approach, it is noted that the present invention is not limited thereto. Rather, the inventive approach of avoiding matrix inversion may also be applied to systems using other transmission approaches.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed. Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer. A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein. A further embodiment comprises a computer having installed thereon the computer program for performing one of the methods described herein. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A method for recovering a desired signal transmitted in the presence of one or more interference signals, the method comprising:

   receiving (500) a signal, the received signal including a desired signal portion and one or more interference signal portions; and
   iteratively (502-512) processing the signal to obtain the desired signal,
   wherein iteratively processing (502-512) the signal comprises processing the signal in each iteration by beamforming (502, 504) having associated therewith one or more beamforming weights, the one or more beamforming weights being calculated for each iteration based on the signal as processed in an earlier iteration, and
   wherein the one or more beamforming weights are calculated without matrix inversion,
   wherein calculating (502) the beamforming weights comprises calculating a beamforming weight vector on the basis of the inverse of the covariance matrix for the noise plus interference signal,
   wherein the beamforming weight vector is calculated as follows:

   $$\mathbf{w}_{k,l} = \mathbf{R}_{k,l}^{-1}\mathbf{h}(x) / [\mathbf{h}^{H}(x)\mathbf{R}_{k,l}^{-1}\mathbf{h}(x)],$$

   $\mathbf{R}_{k,l}^{-1}$ = inverse of the covariance matrix, and

   $\mathbf{h}(x)$ = channel coefficient vector,

   **characterized in that**
   the inverse of the covariance matrix for the dominant interferer (y) is calculated as follows:

$$\mathbf{R}_{k,l}^{-1} = \frac{1}{\sigma_\eta^2}\left(\mathbf{I}_{N_R} - \frac{\mathbf{h}(y)\mathbf{h}^H(y)}{\sigma_\eta^2 / v_{k,l}(y) + |\mathbf{h}(y)|^2}\right),$$

$\sigma_\eta^2$ = variance of the effective noise, and

$v_{k,l}(y)$ = variance of the estimated symbol $\hat{s}_{k,l}(y)$ at the respective iteration.

2. A method for recovering a desired signal transmitted in the presence of one or more interference signals, the method comprising:

receiving (500) a signal, the received signal including a desired signal portion and one or more interference signal portions; and
iteratively processing (502-512) the signal to obtain the desired signal,
wherein iteratively processing (502-512) the signal comprises processing the signal in each iteration by beamforming (502, 504) having associated therewith one or more beamforming weights, the one or more beamforming weights being calculated for each iteration based on the signal as processed in an earlier iteration, and
wherein the one or more beamforming weights are calculated without matrix inversion,
wherein calculating (502) the beamforming weights comprises calculating a beamforming weight vector on the basis of the inverse of the covariance matrix for the noise plus interference signal,
wherein the beamforming weight vector is calculated as follows:

$$\mathbf{w}_{k,l} = \mathbf{R}_{k,l}^{-1}\mathbf{h}(x) / [\mathbf{h}^H(x)\mathbf{R}_{k,l}^{-1}\mathbf{h}(x)],$$

$\mathbf{R}_{k,l}^{-1}$ = inverse of the covariance matrix, and

$\mathbf{h}(x)$ = channel coefficient vector,

**characterized in that**
the inverse of the covariance matrix for the dominant interferer (y) is calculated as follows:

$$\mathbf{R}_k^{-1} = \frac{1}{\sigma_\eta^2}\left(\mathbf{I}_{N_R} - \frac{\mathbf{h}(y)\mathbf{h}^H(y)}{\sigma_\eta^2 / v_k(y) + |\mathbf{h}(y)|^2}\right),$$

$\sigma_\eta^2$ = variance of the effective noise,

$v_{k,l}(y)$ = variance of the estimated symbol, $\hat{s}_{k,l}(y)$ at the respective iteration,

$v_k(y) = \sum_{l=1}^{N_{symb}^{DL}} v_{k,l}(y) / N_{symb}^{DL}$, and

$N_{symb}^{DL}$ number of symbols.

3. The method of claim 1 or 2, wherein calculating (502) the one or more beamforming weights comprises considering only one dominant interferer and treating the other interference signals as additional temporally and spatially white Gaussian noise.

4. The method of one of claims 1 to 3, wherein the desired signal is transmitted using an OFDM transmission, and wherein the same one or more beamforming weights are calculated for a sub-block of an OFDM resource block.

5. The method of claim 4, wherein the OFDM resource block comprises a plurality of subcarriers and a plurality of OFDM symbols, and the sub-block comprises a frequency length ($M_f$) defined by a number of subcarriers in the frequency domain and a time length ($M_t$) defined by a number of OFDM symbols in the time domain.

6.  The method of claim 5, wherein in case a beamforming weight vector is calculated for each subcarrier the time length of the sub-block is equal to the number of OFDM symbols in the resource block and the frequency length of the sub-block is set to one, and wherein a single covariance matrix approximates all covariance matrices in the sub-block for the respective subcarrier.

7.  The method of claim 4 or 5, wherein calculating the beamforming weights comprises calculating the same beam-forming weight vector for the data symbols in the same sub-block.

8.  The method of claim 7, wherein the beamforming weight vector is calculated on the basis of a single covariance matrix approximating all covariance matrices for the noise plus interference signals in the sub-block.

9.  The method of claim 8, wherein the single covariance matrix is calculated as follows:

$$R_p = \frac{1}{M_t M_f} \sum_{k=0}^{M_f} \sum_{l=0}^{M_t} \overline{y}_{k,l} \overline{y}_{k,l}^H \,,$$

$M_t$ = the number of continuous subcarriers in the frequency domain, and
$M_f$ = the number of OFDM symbols in the time domain,
$\overline{y}_{k,l}$ = the processed receive signal.

10. The method of one of claims 7 to 9, wherein in the sub-block the statistical property of the noise plus interference signal are approximated to be constant.

11. The method of one of claims 7 to 10, wherein an OFDM subframe comprises a predefined number ($N_{RB}$) of resource blocks, wherein in the channel coefficients of a transmission channel are approximated to be constant in the time domain during one subframe, wherein the time length of the sub-block is equal to the number of OFDM symbols in the subframe, and wherein the frequency length of the sub-block is set depending on the subcarriers experiencing similar channel fading in the frequency domain.

12. The method of claim 11, wherein in case in the frequency domain the statistical property of the noise plus interference signal in the channel can be approximated to be constant, the frequency length of the sub-block is equal to the number of subcarriers in the subframe.

13. The method of claim 12, wherein in case the channel is a highly frequency selective fading channel, the frequency length of the sub-block is set to one.

14. The method of one of claims 1 to 13, wherein processing the received signal comprises:

    (a) at an initial stage processing the signal received by beamforming using initial beamforming weights,
    (b) obtaining an initial estimate of the strongest signal on the basis of the signal processed by beamforming, the initial estimate including soft information,
    (c) subtracting (508) from the signal received the soft information to generate (510) a processed signal,
    (d) on the basis of the processed signal calculating (502) the beamforming weights,
    (e) obtaining (506) an estimate of the next strongest signal on the basis of the processed signal processed by beamforming, the estimate including soft information, and
    (f) repeating the steps (c) to (e) on the basis of the processed signal, until an estimate of the desired signal portion is obtained or until a maximum number of iterations is reached.

15. The method of one of claims 1 to 14, wherein the initial beamforming weights are calculated on the basis of pilot symbols (208) included in the signal received, wherein the beamforming comprises linear receiver beamforming, e.g. interference rejection combining, and wherein processing the received signal comprises interference cancellation, for example successive interference cancellation.

16. A computer program product comprising instructions stored on a machine-readable medium for performing the method of one of claims 1 to 15, wherein the instructions are executed on a computer.

17. A receiver for recovering a signal transmitted in the presence of one or more interference signals, the receiver comprising:

a plurality of antennas, and
a signal processor (300-306) configured to receive from the antennas a signal, the received signal including a desired signal portion and one or more interference signal portions, and configured to iteratively process the received signal to obtain the desired signal in accordance with the method of one of claims 1 to 15.

18. A mobile unit for a wireless communication system, comprising a receiver of claim 17 for recovering a desired signal transmitted in the presence of one or more interference signals.

19. A base station for a communication system, comprising a receiver of claim 17 for recovering a desired signal transmitted in the presence of one or more interference signals.

**Patentansprüche**

1. Ein Verfahren zum Wiedergewinnen eines gewünschten Signals, das beim Vorliegen von einem oder mehreren Störsignalen gesendet wird, wobei das Verfahren folgende Schritte aufweist:

Empfangen (500) eines Signals, wobei das empfangene Signal einen gewünschten Signalanteil und einen oder mehrere Störsignalanteile umfasst; und
iteratives (502 - 512) Verarbeiten des Signals, um das gewünschte Signal zu erhalten,
wobei das iterative Verarbeiten (502 - 512) des Signals das Verarbeiten des Signals in jeder Iteration durch Beamforming (502, 504) aufweist, dem eine oder mehrere Beamforming-Gewichtungen zugeordnet sind, wobei die eine oder die mehreren Beamforming-Gewichtungen für jede Iteration basierend auf dem Signal berechnet werden, wie es in einer früheren Iteration verarbeitet wurde, und
wobei die eine oder die mehreren Beamforming-Gewichtungen ohne Matrixinversion berechnet werden,
wobei das Berechnen (502) der Beamforming-Gewichtungen das Berechnen eines Beamforming-Gewichtungsvektors auf der Basis des Inversen der Kovarianzmatrix für das Rauschen-plus-Störsignal aufweist,
wobei der Beamforming-Gewichtungsvektor wie folgt berechnet wird:

$$\mathbf{w}_{k,l} = \mathbf{R}_{k,l}^{-1}\mathbf{h}(x) \, / \, [\mathbf{h}^{H}(x)\mathbf{R}_{k,l}^{-1}\mathbf{h}(x)]$$

$\mathbf{R}_{k,l}^{-1}$ = Inverses der Kovarianzmatrix, und
$\mathbf{h}(x)$ = Kanalkoeffizientvektor,

**dadurch gekennzeichnet, dass**
das Inverse der Kovarianzmatrix für den dominanten Störer (y) wie folgt berechnet wird:

$$\mathbf{R}_{k,l}^{-1} = \frac{1}{\sigma_{\eta}^{2}}\left(\mathbf{I}_{N_R} - \frac{\mathbf{h}(y)\mathbf{h}^{H}(y)}{\sigma_{\eta}^{2} \, / \, v_{k,l}(y) + |\mathbf{h}(y)|^{2}}\right)$$

$\sigma_{\eta}^{2}$ = Varianz des effektiven Rauschens, und
$v_{k,l}(y)$ = Varianz des geschätzten Symbols $\hat{s}_{k,l}(y)$ an der jeweiligen Iteration.

2. Ein Verfahren zum Wiedergewinnen eines gewünschten Signals, das beim Vorliegen von einem oder mehreren Störsignalen gesendet wird, wobei das Verfahren folgende Schritte aufweist:

Empfangen (500) eines Signals, wobei das empfangene Signal einen gewünschten Signalanteil und einen oder mehrere Störsignalanteile umfasst; und

iteratives (502 - 512) Verarbeiten des Signals, um das gewünschte Signal zu erhalten, wobei das iterative Verarbeiten (502 - 512) des Signals das Verarbeiten des Signals in jeder Iteration durch Beamforming (502, 504) aufweist, dem eine oder mehrere Beamforming-Gewichtungen zugeordnet sind, wobei die eine oder die mehreren Beamforming-Gewichtungen für jede Iteration basierend auf dem Signal berechnet werden, wie es in einer früheren Iteration verarbeitet wurde, und

wobei die eine oder die mehreren Beamforming-Gewichtungen ohne Matrixinversion berechnet werden, wobei das Berechnen (502) der Beamforming-Gewichtungen das Berechnen eines Beamforming-Gewichtungsvektors auf der Basis des Inversen der Kovarianzmatrix für das Rauschen-plus-Störsignal aufweist, wobei der Beamforming-Gewichtungsvektor wie folgt berechnet wird:

$$\mathbf{w}_{k,l} = \mathbf{R}_{k,l}^{-1}\mathbf{h}(x) \, / \, [\mathbf{h}^{H}(x)\mathbf{R}_{k,l}^{-1}\mathbf{h}(x)]$$

$\mathbf{R}_{k,l}^{-1}$ = Inverses der Kovarianzmatrix, und

$\mathbf{h}(x)$ = Kanalkoeffizientvektor,

**dadurch gekennzeichnet, dass**
das Inverse der Kovarianzmatrix für den dominanten Störer (y) wie folgt berechnet wird:

$$\mathbf{R}_{k,l}^{-1} = \frac{1}{\sigma_{\eta}^{2}}\left( \mathbf{I}_{N_R} - \frac{\mathbf{h}(y)\mathbf{h}^{H}(y)}{\sigma_{\eta}^{2} \, / \, v_{k,l}(y) + \left|\mathbf{h}(y)\right|^{2}} \right)$$

$\sigma_{\eta}^{2}$ = Varianz des effektiven Rauschens, und

$v_{k,l}(y)$ = Varianz des geschätzten Symbols $\hat{s}_{k,l}(y)$ an der jeweiligen Iteration,

$$v_{k}(y) = \sum\nolimits_{l=1}^{N_{symb}^{DL}} v_{k,l}(y) \, / \, N_{symb}^{DL} \, , \text{ und}$$

$N_{symb}^{DL}$ = Anzahl von Symbolen.

3. Das Verfahren gemäß Anspruch 1 oder 2, bei dem das Berechnen (502) der einen oder der mehreren Beamforming-Gewichtungen das Berücksichtigen von nur einem dominanten Störer und das Behandeln der anderen Störsignale als zusätzliches zeitliches und räumliches weißes Gaußsches Rauschen aufweist.

4. Das Verfahren gemäß einem der Ansprüche 1 bis 3, bei dem das gewünschte Signal unter Verwendung einer OFDM-Übertragung gesendet wird, und bei dem die gleiche eine oder mehreren Beamforming-Gewichtungen für einen Teilblock eines OFDM-Ressourcenblocks berechnet werden.

5. Das Verfahren gemäß Anspruch 4, bei dem der OFDM-Ressourcenblock eine Mehrzahl von Teilträgern und eine Mehrzahl von OFDM-Symbolen aufweist, und der Teilblock eine Frequenzlänge ($M_f$), definiert durch eine Anzahl von Teilträgern in dem Frequenzbereich, und eine Zeitdauer ($M_t$), definiert durch eine Anzahl von OFDM-Symbolen in dem Zeitbereich, aufweist.

6. Das Verfahren gemäß Anspruch 5, bei dem in dem Fall, dass ein Beamforming-Gewichtungsvektor für jeden Teilträger berechnet wird, die Zeitdauer des Teilblocks gleich der Anzahl von OFDM-Symbolen in dem Ressourcenblock ist, und die Frequenzlänge des Teilblocks auf eins eingestellt ist, und wobei eine einzige Kovarianzmatrix alle Kovarianzmatrizen in dem Teilblock für den jeweiligen Teilträger nähert.

7. Das Verfahren gemäß Anspruch 4 oder 5, bei dem das Berechnen der Beamforming-Gewichtungen das Berechnen des gleichen Beamforming-Gewichtungsvektors für die Datensymbole in dem gleichen Teilblock aufweist.

8. Das Verfahren gemäß Anspruch 7, bei dem der Beamforming-Gewichtungsvektor auf der Basis einer einzelnen Kovarianzmatrix berechnet wird, die alle Kovarianzmatrizen für die Rauschen-Plus-Störsignale in dem Teilblock nähert.

9. Das Verfahren gemäß Anspruch 8, bei dem die einzelne Kovarianzmatrix wie folgt berechnet wird:

$$R_p = \frac{1}{M_t M_f} \sum_{k=0}^{M_t} \sum_{l=0}^{M_t} \overline{y}_{k,l} \overline{y}_{k,l}^H$$

$M_t$ = die Anzahl von kontinuierlichen Teilträgern in dem Frequenzbereich, und
$M_f$ = Anzahl von OFDM-Symbolen in dem Zeitbereich,
$\overline{y}_{k,l}$ = das verarbeitete Empfangssignal.

10. Das Verfahren gemäß einem der Ansprüche 7 bis 9, bei dem in dem Teilblock die statistische Eigenschaft des Rauschen-plus-Störsignals genähert wird, um konstant zu sein.

11. Das Verfahren gemäß einem der Ansprüche 7 bis 10, bei dem ein OFDM-Teilrahmen eine vorbestimmte Anzahl ($N_{RB}$) von Ressourcenblöcken aufweist, wobei in dem Kanal Koeffizienten eines Übertragungskanals genähert werden, um in dem Zeitbereich während eines Teilrahmens konstant zu sein, wobei die Zeitdauer des Teilblocks gleich der Anzahl von OFDM-Symbolen in dem Teilrahmen ist, und wobei die Frequenzlänge des Teilblocks eingestellt wird abhängig von den Teilträgern, die in dem Frequenzbereich ähnliches Kanalfading erfahren.

12. Das Verfahren gemäß Anspruch 11, bei dem in dem Fall, in dem in dem Frequenzbereich die statistische Eigenschaft des Rauschen-plus-Störsignals in dem Kanal genähert werden kann, um konstant zu sein, die Frequenzlänge des Teilblocks gleich der Anzahl von Teilträgern in dem Teilrahmen ist.

13. Das Verfahren gemäß Anspruch 12, bei dem, falls der Kanal ein hoch frequenzselektiver Fading-Kanal ist, die Frequenzlänge des Teilblocks auf eins eingestellt ist.

14. Das Verfahren gemäß einem der Ansprüche 1 bis 13, bei dem das Verarbeiten des empfangenen Signals folgende Schritte aufweist:

(a) an einer Anfangsstufe, Verarbeiten des empfangenen Signals durch Beamforming, unter Verwendung von anfänglichen Beamforming-Gewichtungen,
(b) Erhalten einer anfänglichen Schätzung des stärksten Signals auf der Basis des durch Beamforming verarbeiteten Signals, wobei die anfängliche Schätzung weiche Informationen umfasst,
(c) Subtrahieren (508) der weichen Informationen von dem empfangenen Signal, um ein verarbeitetes Signal zu erzeugen (510),
(d) auf der Basis des verarbeiteten Signals, Berechnen (502) der Beamforming-Gewichtungen,
(e) Erhalten (506) einer Schätzung des nächst stärksten Signals auf der Basis des verarbeiteten Signals, das durch Beamforming verarbeitet wurde, wobei die Schätzung weiche Informationen enthält, und
(f) Wiederholen der Schritte (c) bis (e) auf der Basis des verarbeiteten Signals, bis eine Schätzung des gewünschten Signalanteils erhalten wird oder bis eine maximale Anzahl von Iterationen erreicht wird.

15. Das Verfahren gemäß einem der Ansprüche 1 bis 14, bei dem die anfänglichen Beamforming-Gewichtungen auf der Basis von Pilotsymbolen (208) berechnet werden, die in dem empfangenen Signal enthalten sind, wobei das Beamforming lineares Empfänger-Beamforming aufweist, z. B. Störunterdrückungskombination, und wobei das Verarbeiten des empfangenen Signals Störaufhebung umfasst, beispielsweise sukzessive Störaufhebung.

**EP 2 575 274 B1**

16. Ein Computerprogrammprodukt, das Anweisungen aufweist, die auf einem maschinenlesbaren Medium gespeichert sind zum Durchführen des Verfahrens gemäß einem der Ansprüche 1 bis 15, wobei die Anweisungen auf einem Computer ausgeführt werden.

17. Ein Empfänger zum Wiedergewinnen eines Signals, das beim Vorliegen von einen oder mehreren Störsignalen übertragen wird, wobei der Empfänger folgende Merkmale aufweist:

eine Mehrzahl von Antennen, und
einen Signalprozessor (300 - 306), der konfiguriert ist, um von den Antennen ein Signal zu empfangen, wobei das empfangene Signal einen gewünschten Signalanteil und einen oder mehrere Störsignalanteile umfasst, und konfiguriert ist, um das empfangene Signal iterativ zu verarbeiten, um das gewünschte Signal gemäß dem Verfahren nach einem der Ansprüche 1 bis 15 zu erhalten.

18. Eine mobile Einheit für ein drahtloses Kommunikationssystem, die einen Empfänger gemäß Anspruch 17 aufweist zum Wiedergewinnen eines gewünschten Signals, das beim Vorliegen von einem oder mehreren Störsignalen gesendet wird.

19. Eine Basisstation für ein Kommunikationssystem, das einen Empfänger gemäß Anspruch 17 aufweist zum Wiedergewinnen eines gewünschten Signals, das beim Vorliegen von einem oder mehreren Störsignalen gesendet wird.

**Revendications**

1. Procédé pour récupérer un signal désiré transmis en présence d'un ou plusieurs signaux d'interférence, le procédé comprenant:

recevoir (500) un signal, le signal reçu comportant une partie de signal désiré et une ou plusieurs parties de signal d'interférence; et
traiter de manière itérative (502 à 512) le signal pour obtenir le signal désiré,
dans lequel le traitement itératif (502 à 512) du signal comprend le fait de traiter le signal dans chaque itération par formation de faisceau (502, 504) présentant, y associés, un ou plusieurs poids de formation de faisceau, les un ou plusieurs poids de formation de faisceau étant calculés pour chaque itération sur base du signal traité dans une itération antérieure, et
dans lequel un ou plusieurs poids de formation de faisceau sont calculés sans inversion de matrice,
dans lequel le calcul (502) des poids de formation de faisceau comprend le fait de calculer un vecteur de poids de formation de faisceau sur base de l'inverse de la matrice de covariance pour le signal de bruit plus interférence, dans lequel le vecteur de poids de formation de faisceau est calculé comme suit:

$$w_{k,l} = R_{k,l}^{-1}h(x)/\left[h^H(x)R_{k,l}^{-1}h(x)\right],$$

$R_{k,l}^{-1}$ = inverse de la matrice de covariance, et
h(x) = vecteur de coefficients de canal,

**caractérisé par le fait que** l'inverse de la matrice de covariance pour le signal d'interférence dominant (y) est calculé comme suit:

$$R_{k,l}^{-1} = \frac{1}{\sigma_n^2}\left(I_{N_R} - \frac{h(y)h^H(y)}{\sigma_n^2/v_{k,l} + |h(y)|^2}\right),$$

$\sigma_n^2$ = variance du bruit effectif, et
$v_{k,l}(y)$ = variance du symbole estimé $\hat{s}_{k,l}(y)$ à l'itération respective.

**2.** Procédé pour récupérer un signal désiré transmis en présence d'un ou plusieurs signaux d'interférence, le procédé comprenant:

> recevoir (500) un signal, le signal reçu comportant une partie de signal désiré et une ou plusieurs parties de signal d'interférence; et
> traiter de manière itérative (502 à 512) le signal, pour obtenir le signal désiré,
> dans lequel le traitement itératif (502 à 512) du signal comprend le fait de traiter le signal dans chaque itération par formation de faisceau (502, 504) présentant, y associés, un ou plusieurs poids de formation de faisceau, les un ou plusieurs poids de formation de faisceau étant calculés pour chaque itération sur base du signal traité dans une itération antérieure, et
> dans lequel un ou plusieurs poids de formation de faisceau sont calculés sans inversion de matrice,
> dans lequel le calcul (502) des poids de formation de faisceau comprend le fait de calculer un vecteur de poids de formation de faisceau sur base de l'inverse de la matrice de covariance pour le signal de bruit plus interférence,
> dans lequel le vecteur de poids de formation de faisceau est calculé comme suit:

$$w_{k,l} = R_{k,l}^{-1} h(x) / \left[ h^H(x) R_{k,l}^{-1} h(x) \right],$$

> $R_{k,l}^{-1}$ = inverse de la matrice de covariance, et

> h(x) = vecteur de coefficients de canal,

**caractérisé par le fait que**
l'inverse de la matrice de covariance pour l'interférant dominant (y) est calculé comme suit:

$$R_k^{-1} = \frac{1}{\sigma_n^2} \left( I_{N_R} - \frac{h(y)h^H(y)}{\sigma_n^2 / v_k(y) + |h(y)|^2} \right)$$

> $\sigma_n^2$ = variance du bruit effectif, et
> $v_{k,l}(y)$ = variance du symbole estime $\hat{s}_{kl}$ (y) à l'itération respective $\hat{s}_{k,l}(y)$, et

$$v_k(y) \sum_{i=1}^{N_{symb}^{DL}} v_{k,l}(y) / N_{symb}^{DL} \text{ , et}$$

$N_{symb}^{DL}$ = nombre de symboles.

**3.** Procédé selon la revendication 1 ou 2, dans lequel le calcul (502) des un ou plusieurs poids de formation de faisceau comprend le fait de ne considérer qu'un signal d'interférence dominant et de traiter les autres signaux d'interférence comme bruit gaussien additionnel temporairement et spatialement blanc.

**4.** Procédé selon les revendications 1 à 3, dans lequel le signal désiré est transmis à l'aide d'une transmission OFDM, et dans lequel les mêmes un ou plusieurs poids de formation de faisceau sont calculés pour un sous-bloc d'un bloc de ressources OFDM.

**5.** Procédé selon la revendication 4, dans lequel le bloc de ressources OFDM comprend une pluralité de sous-porteuses et une pluralité de symboles OFDM, et le sous-bloc comprend une longueur de fréquence ($M_f$) définie par un nombre de sous-porteuses dans le domaine fréquentiel et une longueur de temps ($M_t$) définie par un nombre de symboles OFDM dans le domaine temporel.

**6.** Procédé selon la revendication 5, dans lequel, au cas où le vecteur de poids de formation de faisceau est calculé pour chaque sous-porteuse, la longueur de temps de sous-bloc est égale au nombre de symboles OFDM dans le bloc de ressources et la longueur de fréquence de sous-bloc est réglée à un, et dans lequel une seule matrice de covariance approxime toutes les matrices de covariance dans le sous-bloc pour la sous-porteuse respective.

7. Procédé selon la revendication 4 ou 5, dans lequel le calcul des poids de formation de faisceau comprend le fait de calculer le même vecteur de poids de formation de faisceau pour les symboles de données dans le même sous-bloc.

8. Procédé selon la revendication 7, dans lequel le vecteur de poids de formation de faisceau est calculé sur base d'une seule matrice de covariance approximant toutes les matrices de covariance pour les signaux de bruit plus interférence dans le sous-bloc.

9. Procédé selon la revendication 8, dans lequel la matrice de covariance unique est calculée comme suit:

$$R_p = \frac{1}{M_t M_f} \sum_{k=0}^{M_f} \sum_{l=0}^{M_t} \overline{y}_{k,l} \overline{y}_{k,l}^H \, ,$$

$M_t$ = le nombre de sous-porteuses continues dans le domaine fréquentiel, et
$M_f$ = le nombre de symboles OFDM dans le domaine temporel,
$\overline{y}_{k,l}$ = le signal de réception traite.

10. Procédé selon l'une des revendications 7 à 9, dans lequel, dans le sous-bloc, la propriété statistique du signal bruit plus interférence est approximée de manière à être constante.

11. Procédé selon l'une des revendications 7 à 10, dans lequel une sous-trame OFDM comprend un nombre prédéfini (($N_{RB}$) de blocs de ressources, dans lequel, dans le canal, les coefficients d'un canal de transmission sont approximés de manière à être constants dans le domaine temporel pendant une sous-trame, dans lequel la longueur de temps de sous-bloc est égale au nombre de symbole OFDM dans la sous-trame, et dans lequel la longueur de fréquence de sous-bloc est réglée en fonction des sous-porteuses expérimentant un évanouissement de canal similaire dans le domaine fréquentiel.

12. Procédé selon la revendication 11, dans lequel, au cas où dans le domaine fréquentiel la propriété statistique du signal bruit plus interférence dans le canal peut être approximée de manière à être constante, la longueur de fréquence du sous-bloc est égale au nombre de sous-porteuses dans la sous-trame.

13. Procédé selon la revendication 12, dans lequel, au cas où le canal est un canal à évanouissement hautement sélectif en fréquence, la longueur de fréquence de sous-bloc est réglée à un.

14. Procédé selon l'une des revendications 1 à 13, dans lequel le traitement du signal reçu comprend:

(a) à un stade initial, traiter le signal reçu par formation de faisceau à l'aide de poids de formation de faisceau initiaux,
(b) obtenir une estimation initiale du signal le plus fort sur base du signal traité par formation de faisceau, l'estimation initiale comportant une information douce,
(c) soustraire (508) du signal reçu l'information douce, pour générer (510) un signal traité,
(d) sur base du signal traité, calculer (502) les poids de formation de faisceau,
(e) obtenir (506) une estimation du deuxième signal le plus fort sur base du signal traité par formation de faisceau, l'estimation comportant une information douce, et
(f) répéter les étapes (c) à (e) sur base du signal traité jusqu'à ce que soit obtenue une estimation de la partie de signal désiré ou jusqu'à ce que soit atteint un nombre maximum d'itérations.

15. Procédé selon l'une des revendications 1 à 14, dans lequel les poids de formation de faisceau initiaux sont calculés sur base de symboles pilotes (208) inclus dans le signal reçu, dans lequel la formation de faisceau comprend la formation de faisceau de récepteur linéaire, par exemple combinaison de rejets d'interférences, et dans lequel le traitement du signal reçu comprend l'annulation d'interférences, par exemple annulation d'interférences successives.

16. Programme d'ordinateur comprenant des instructions mémorisées sur un support lisible en machine pour réaliser le procédé selon l'une des revendications 1 à 15, dans lequel les instructions sont exécutées sur un ordinateur.

17. Récepteur pour récupérer un signal transmis en présence d'un ou plusieurs signaux d'interférence, le récepteur comprenant:

une pluralité d'antennes, et
un processeur de signal (300 à 306) configuré pour recevoir un signal des antennes, le signal reçu comportant une partie de signal désiré et une ou plusieurs parties de signal d'interférence, et configuré pour traiter de manière itérative le signal reçu, pour obtenir le signal désiré selon le procédé de l'une des revendications 1 à 15.

18. Unité mobile pour un système de communication sans fil, comprenant un récepteur selon la revendication 17 pour récupérer un signal désiré transmis en présence d'un ou plusieurs signaux d'interférence.

19. Station de base pour un système de communication, comprenant un récepteur selon la revendication 17 pour récupérer un signal désiré transmis en présence d'un ou plusieurs signaux d'interférence.

Rg$_3$

Rg$_2$

UE$_4$

BS$_2$

BS$_3$

R$_2$

UE

UE$_5$

UE$_2$

UE$_3$

NodeB

BS$_1$

UE$_1$

R$_1$

Rg$_1$

——— serving link

·········· interference link

**FIG 1**

FIG 2

FIG 3

EP 2 575 274 B1

..0010110.1.

100

deinterleaver

| MIMO detection & interference cancellation | → | $\Pi^{-1}$ | → | channel decoder |

102

106

$\Pi$

interleaver

104

Fig. 4

Fig. 5

Transmitter:

Source → Channel Encoder (202) → Interleaver (204) → Symbol Mapper (206) → MUX (210) → OFDM MOD → (212)

Pilots (208)

200

211

Fig. 6

Receiver:

Source

Interference

$y_{k,l}$

OFDM DEMOD (300) → Receiver beamforming weights updates (301) → Symbol detector (302) $L_e(s_{k,l,j})$ → Deinterleaver (304) → Channel decoder (306)

Interleaver (308) ← $L_e^d(s_{k,l,j})$

Fig. 7

## FIG 8

received signal
(incl. desired & interference portion)

500 — | signal = received signal |

502 — | calculate beam forming weights from signal |

504 — | apply linear beam forming to the signal |

506 — | obtain estimated symbol from strongest signal |

508 — | subtract estimated symbol from signal to generate processed signal |

510 — | signal = processed signal |

512 — final estimate or max. number of iterations reached?  — no

yes

514 — | decode signal |

output decoded signal

block beamforming

per-carrier beamforming

$w_1$ $w_2$ $w_3$ $w_{12}$

(a)

(b)

Fig 9

30

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. WINTERS.** Optimum combining in digital mobile radio with cochannel interference. *IEEE J. Sel. Areas Commun.,* July 1984, vol. 2 (4), 528-539
- **A. N. BARRETO ; R. D. VIEIRA.** A critical analysis of receiver diversity with multiple antennas with spatially coloured noise. *Proc. of Intl. Workshop on Signal Processing Advances in Wireless Communication,* July 2008
- **M. TÜCHLER ; R. KOETTER ; A. C. SINGER.** Turbo equalization: principles and new results. *IEEE Trans. Commun.,* May 2005, vol. 50 (5), 754-767
- **X. WANG ; H. POOR.** Iterative (turbo) soft interference cancellation and decoding for coded CDMA. *IEEE Trans. Commun.,* July 1999, vol. 47 (7), 1046-1061
- **G. J. FOSCHINI ; G. D. GOLDEN ; R. A. VALENZUELA ; P. W. WOLNIANSKY.** Simplified processing for high spectral efficiency wireless communication employing multi-element arrays. *IEEE J. Sel. Areas Commun.,* November 1999, vol. 17 (11), 1841-1852
- **KUN FANG.** Iterative OFDM receiver with combined interference suppression and cancellation. *Personal Indoor and Mobile Radio Communications (PIMRC), 2011 IEEE 22nd International Symposium,* 11 September 2011, 1412-1416
- **R. A. MONZINGO ; T. W. MILLER.** *Introduction to adaptive arrays,* 1980
- **L. ZHENG ; D.N.C. TSE.** Diversity and multiplexing: A fundamental trade-off in multiple antenna channels. *IEEE Trans. On Inform. Theory,* May 2003, vol. 49 (5), 1073-1096
- **M. TÜCHLER ; A.C. SINGER ; R. KOETTER.** Minimum mean squared error equalization using a priori information. *IEEE Trans. Signal Processing,* March 2002, vol. 50, 673-683
- **J. WINTERS.** Optimum combining in digital mobile radio with cochannel interference. *IEEE J. Sel. Areas Communication,* July 1984, vol. 2 (4), 528-539
- **R.A. MONZINGO ; T.W. MILLER.** *Introduction to adaptive arrays,* 1980
- **E.G. LARSSON.** Robust structured interference rejection combining. *Proc. of IEEE Wireless Communications and Networking Conference,* March 2005
- **M. TÜCHLER ; R. KOETTER ; A. C. SINGER.** Turbo equalization: principles and new results. *IEEE Trans. Commun.,* May 2002, vol. 50 (5), 754-767
- **M. TÜCHLER ; A. C. SINGER ; R. KOETTER.** Minimum mean squared error equalization using a priori information. *IEEE Trans. Signal Processing,* March 2002, vol. 50, 673-683
- **K. FANG ; L. RUGINI ; G. LEUS.** Low-complexity block turbo equalization for OFDM systems in time-varying channels. *IEEE Trans. Signal Processing,* November 2008, vol. 56 (11), 5555-5566